(19) **Europäisches Patentamt**
**European Patent Office**
**Office européen des brevets**

(11) **EP 2 834 951 B1**

(12) **EUROPEAN PATENT SPECIFICATION**

(45) Date of publication and mention
of the grant of the patent:
**23.03.2016 Bulletin 2016/12**

(51) Int Cl.:
***H04L 12/729*** (2013.01)

(21) Application number: **13715390.4**

(22) Date of filing: **28.03.2013**

(86) International application number:
**PCT/GB2013/000142**

(87) International publication number:
**WO 2013/144550 (03.10.2013 Gazette 2013/40)**

(54) **METHOD FOR SELECTING A COMMUNICATION LINK**

VERFAHREN ZUR AUSWAHL EINES KOMMUNIKATIONSPFADES

PROCÉDÉ DE SÉLECTION D'UNE LIAISON DE COMMUNICATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2012 EP 12250084**

(43) Date of publication of application:
**11.02.2015 Bulletin 2015/07**

(73) Proprietor: **British Telecommunications Public Limited Company**
**London EC1A 7AJ (GB)**

(72) Inventors:
• **KARTHIKEYAN, Vidhyalakshmi**
**London EC1A 7AJ (GB)**

• **NAUCK, Detlef Daniel**
**London EC1A 7AJ (GB)**

(74) Representative: **Lidbetter, Timothy Guy Edwin**
**British Telecommunications plc**
**Intellectual Property Department**
**PP C5A, BT Centre**
**81 Newgate Street**
**London EC1A 7AJ (GB)**

(56) References cited:
**US-B1- 6 728 239    US-B1- 6 931 109**
**US-B1- 7 490 169**

**Description**

The present invention relates to a method of operating a communications network, and in particular to a method of controlling the admission of sessions into and across a communications network.

Call or session admission requests are made using component protocols, for example the Session Initiation Protocol (SIP) or a protocol from the H.323 protocol suite, although it would be understood that other protocols are known. H.323, in a Voice over IP (VoIP) example, uses H.225.0 to make an admission request (ARQ), with protocol H.245 being used to negotiate audio parameters that will be used in the sessions. Even if a proprietary protocol is being used, such a request will contain information about the supported and desired Quality of Service parameters - a function of, for example, bandwidth (B) required at bitrate $r_b$, maximum loss supportable for service $l_m$, maximum tolerable delay $t_d$ and jitter $t_j$. This admission request can be expressed in a generalised form as;

$$ARQ = f(B, r_b, l_m, t_d, t_j)$$

This request can be translated into one of many pre-defined 6-bit DSCP (Differentiated Services Code Point) values used in IP/MPLS data packets either at the source of the data, that is within a customer's network or at the Provider Edge (PE) of the network. There are several label distribution protocols that can be used to create and make bindings of labels to forwarding equivalence classes (FEC) in MPLS networks. Examples include BGP (Border Gateway Protocol), RSVP-TE (Resource Reservation Protocol - Traffic Engineering), LDP (Label Distribution Protocol) and TDP (Tag Distribution Protocol). The following discussion will focus on the use of RSVP-TE in this IRF but the principles of the present invention have broader relevance than the message carrying protocols used in a particular embodiment. US 7 490 169 discloses a method for selecting sessions, networks & network links based on available network resources, such as bandwidth, and the costs of the network links. Network performance data and cost information is collected and is then used in the selection of network links.

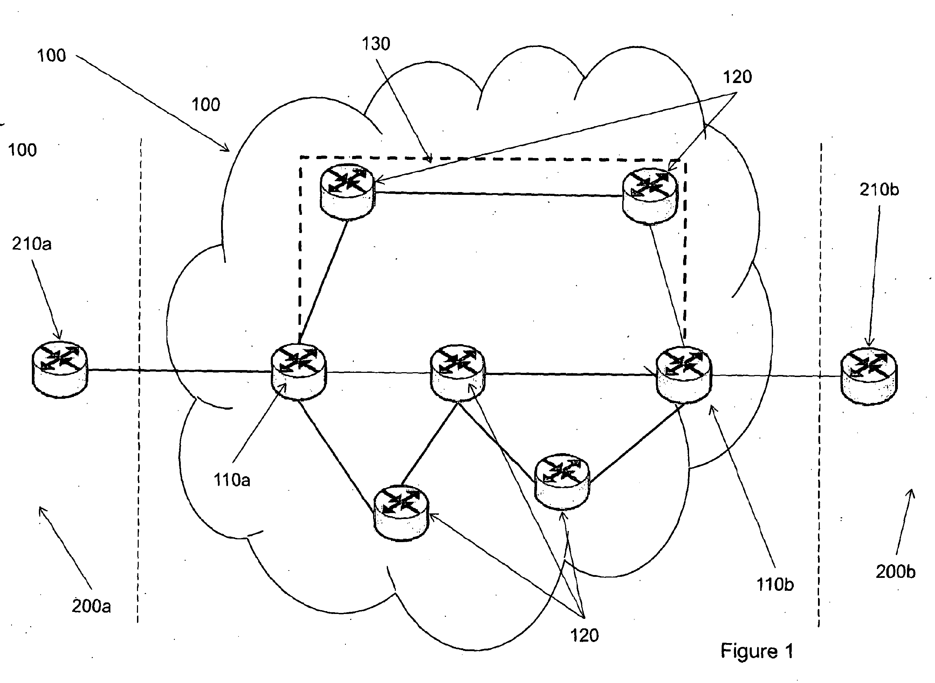

Figure 1 shows a schematic depiction of a conventional MPLS network 100. The MPLS network 100 connects a first customer network 200a to a second customer network 200b.

The first customer network 200a comprises a provider edge router 210a which is in communication with a first MPLS network provider edge router 110a. Similarly, the second customer network 200b comprises a provider edge router 210b which is in communication with a second MPLS network provider edge router 110b. The MPLS network 100 further comprises a plurality of provider routers 120 which provide a plurality of routes through the MPLS network from the first MPLS network provider edge router 110a to the second MPLS network provider edge router 110b. In one implementation of MPLS, the ingress provider edge router defines the path that an MPLS-enabled session must take to reach the egress provider edge router. This is called explicit routing, which can be strict or loose. The intelligence is therefore pushed to the provider edge routers in MPLS, where they classify, encapsulate, route and decapsulate sessions using stacked label switching whereas the provider routers (that is a router which act only as a transit router within a network) will only perform label switching.

Figure 1 further shows an MPLS tunnel which connects the first and second MPLS network provider edge routers 110a, 110b. Once an MPLS tunnel has been created, it will only be used for traffic forwarding by the Interior Gateway Protocols (IGPs) if this is programmed after tunnel setup. When an admission request arrives at a Provider Edge router, admission is granted or denied based on availability of resources, usually availability of bandwidth for the required bitrate, in the network for that session using the DSCP value (which will correspond to the QoS that the service requests). If the MPLS tunnels have been advertised to the Interior Gateway Protocol (IGP) then they can be used for routing the admitted traffic trunk if they meet its QoS requirements. The mapping of the route of the tunnel to the hardware below can change during the course of the session due to changes in the IGP. This is used for temporary resilience in the event of link or router failure and is called Fast Re-Route (FRR). Examples of IGPs are Open Shortest Path First (OSPF), Intermediate System to Intermediate System (IS-IS) and Routing Information Protocol (RIP). OSPF and IS-IS are link state protocols, which means that each node that uses this protocol has a knowledge of the entire topology and link costs of its local network.

Bashar et al, "Machine Learning Based Call Admission Control Approaches: A Comparative Study" discloses a technique of estimating the current value of a network parameter that is difficult to measure based on the current measurement of other network parameters based on historical variations of the different parameters.

According to a first aspect of the present invention there is provided a method of operating a communications network, the method comprising the steps of: receiving a request to admit a session to the network, the session being routed between a first network node and a second network node; selecting a route through the network from the first network node to the second network node, the route comprising a plurality of communications links; characterised in that the method comprises the further steps of: selecting a communication link which is most likely to fail; for that selected communications link: a) determining the expected performance of that link for the duration of the requested session; b) determining the impact of admitting the requested session to the sessions already supported by the selected communications link; and c) evaluating the historical performance of the selected communications link; and accepting the request to admit a session to the network if the admitted session can be supported throughout the duration of the session without impacting presently supported sessions.

According to a second aspect of the present invention there is provided a network gatekeeper configured, in use, to receive a request to admit a session to a communications network, the session being routed between a first network node and a second network node; select a route through the network from the first network node to the second network node, the route comprising a plurality of communications links; characterised in that the network gatekeeper is further configured to, in use select a communication link which is most likely to fail; assess the suitability of the selected communications link on the basis of: a) the expected performance of that communications link for the duration of the requested session; b) the impact of admitting the requested session to the sessions already supported by the selected communications link; and c) the historical performance of the selected communications link; and accept the request to admit a session to the network the selected communications link is assessed to be suitable.

According to a third aspect of the present invention there is provided a data carrier device comprising computer executable code for performing a method as described above.

Embodiments of the present invention will now be described, by way of example only, with reference to the accompanying drawings in which:

Figure 1 shows a schematic depiction of a conventional MPLS network;
Figure 2 shows a schematic depiction of a local network which comprises a plurality of interconnected routers and network gatekeeper;
Figure 3 shows a schematic depiction of a further network configuration in which such a gatekeeper can be implemented; and

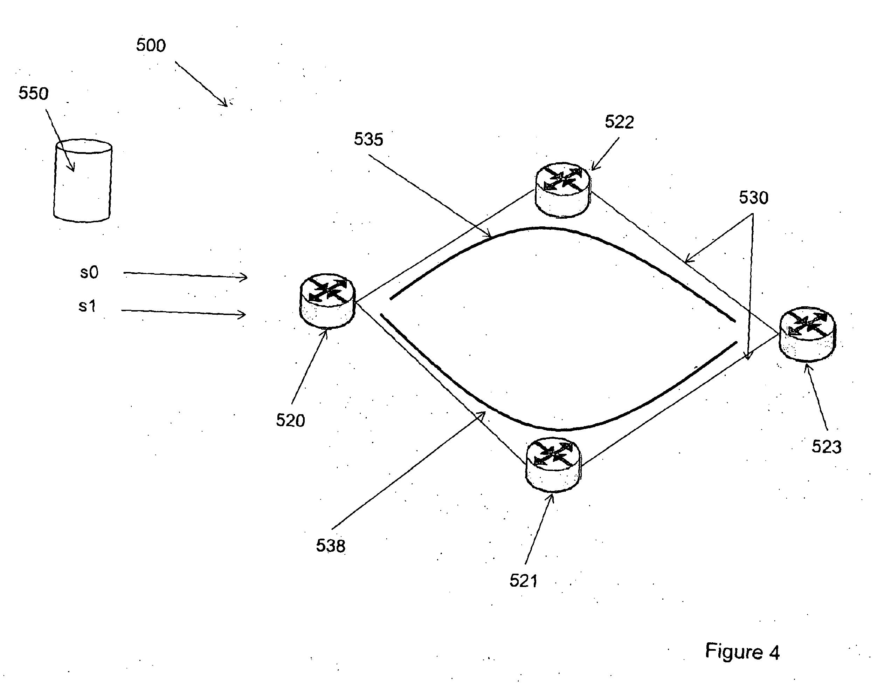

Figure 4 shows a schematic depiction of a network comprising four routers, each of which is interconnected by network links.

A method according to the present invention requires the application of one or more predictive models to predict network performance or related parameters. Predictive models can be built from historical data and are then used to predict certain variables used in making decisions about traffic admission, routing or load balancing. There are several data sources used to build predictive network models:

1. OSPF Type 10 Link State Advertisements (LSAs) that provide information about the maximum, reservable and unreserved bandwidth on the links that send this update. These are extensions proposed for OSPF to support MPLS TE.
2. Link failure predictions, for example as described in WO2011/117570
3. Management Information Base (MIB) parameters polled regularly and collected using an existing protocol (for example the Simple Network Management Protocol). Examples of parameters collected include, without limitation:

| Object | Description |
| --- | --- |
| ifSpeed | An estimate of the interface's current data rate capacity |
| ipInReceives | Number of IP datagrams received from the interface including received in error. |
| ipInDiscards | Number of IP datagrams for which no problems were encountered to prevent their continued processing but they were discarded |
| ipOutDiscards | Number of IP datagram for which no errors were encountered to prevent their continued processing but were discarded (e.g. buffer full) |
| ipReamsOKs | Number of datagrams successfully reassembled |
| ipReamsFails | Number of failure detected by the reassembly software |

4. Rate of change of Explicit Congestion Notification (ECN) flags for services in classes of services that use them (e.g. Assured Forwarding)
5. Bandwidth threshold at which Weighted Random Early Detection (WRED) is triggered for the Assured Forwarding classes of service
6. Forecasts about predicted incoming content/sessions based on personal recommendations, subscription information and other user details (for example as disclosed in GB2011/001773)
7. Local performance predictions per link (such as those disclosed in GB2011/001733)

8. Historical performance of a link for a given class of service.

The above metrics are used to create a per DCSP value model of each network entity, either at an interface or router level. Such a model may be created by:

i) Determining, based on the interface speed of a router held in the MIB, whether the desired data rate can be supported over the link when no other service is being carried on the link.

ii) Predicting the performance (for example throughput, loss, jitter, delay etc.), for a link against a local service level agreement (SLA) for each class of service supported by the link. The MIB parameters relating to packet discards due to congestion or protocol errors, ingress/egress buffer and link occupancy, rate of incoming packets, rate of transmitted packets can be used to predict (for example, using a time series analysis), the predicted performance. Similarly, if the rate of change of ECN notifications per traffic trunk is positive, congestion is increasing. If the rate of change increases, congestion will be building up more rapidly. Building a time series forecast is one technique to make such predictions (such as that disclosed in GB2011/001733)

iii) The arrival of new traffic into the network can be predicted, which enables a network element (such as a link or a router) to be configured to provide a given bandwidth of packets at a pre-determined class of service at a certain time in the future using mechanisms, such as those proposed in GB2011/001773.

iv) The maximum reservable bandwidth as a proportion of the reserved bandwidth from the OSPF LSAs, in conjunction with performance predictions about existing services, is used to determine whether there is enough room to accommodate more sessions. User and content metadata can be analysed to determine how long existing and expected sessions are expected to traverse the network. This affects the tunnel paths at a certain time for new sessions admitted into the network.

v) Predictions of new traffic can also be used with an incoming session request to potentially reject an incoming session in order to admit another of a higher class of service, which is expected to arrive within a short interval. One policy could dictate that a long AF4 (Assured Forwarding 4) session is turned down in preference to an expected short Expedited Forwarding (EF) session at a scheduled time later than the arrival of the AF4-marked session, if the impact of the AF4-marked session would deteriorate the QoS of the EF-marked session. Other operator policies can also be implemented.

vi) Any links with failures predicted from other link failures or time of day (see the applicant's co-pending application WO2011/117570) or a Planned Engineering Work (PEW)/Major Service Outage (MSO) list are removed from being used in the MPLS tunnels prior to the time when the failure is predicted to happen. This is to make sure that these routes are not mapped to MPLS labels or used in resource reservation when they may fail during the session itself. The expected duration of the session, if available from user history metrics, subscription information, TV schedules etc., can be used to exclude a failing link from being used in the MPLS tunnel.

vii) A regression model can be built to calculate the impact of admitting a service into the network based on current and expected performance of the as-is situation, in conjunction with the load and per class of service performance required by the new session.

viii) Before assigning a tunnel to a link and then to a DSCP value, the performance of the link in historical data for the same class of service at a similar load can be used to determine whether a link will perform as expected once a given session has been admitted. If a prediction indicates that a given link is capable of supporting a given session at a specified class of service (based on any or all of the above and the RSVP protocol PATH or RESERVATION messages) but its past performance indicates otherwise with a high confidence, this link is not appended to the tunnel that carries that session. Such an assessment may be made on the basis of rule mining, for example e.g. association rule mining, of the performance of a link appended to an MPLS label in historical data (as described in GB2011/001733).

The result of the above is a decision engine or decision process using a number of time-dependent models per router, or per interface, for each class of service. The models can be created by several possible machine learning methods (e.g. Bayesian network, neural network, decision tree, time series prediction, regression) or by explicit knowledge representation (e.g. rule base). If a Bayesian network is used then each variable or attribute required for making a decision will be represented as a node in the Bayesian network. Each node provides a probability distribution for the possible values of the respective variable, or decision point, it represents. For example, one of the nodes could indicate the likelihood of satisfying a certain class of service request given all the other predictions, impact calculations and past performance. It is also possible to calculate, given that a session is admitted, the expected QoS parameters for all the other sessions. There are well known learning algorithms that can generate a Bayesian network from data (see, for example, D. Heckerman, 'A Tutorial on Learning with Bayesian Networks' from "Learning in Graphical Models", M. Jordan, ed.. MIT Press, Cambridge, MA, 1999).

The data required for the learning algorithm is historic network performance data that records values for each required decision variables. The principle is the same for other machine learning models. However, a Bayesian network has the advantage that all its variables can function both as input and output variables. Other machine learning models like neural networks, decision trees or regression models distinguish between input and output variables. This can mean that for each decision variable a separate model has to be built, whilst in the case of a Bayesian network a single model is sufficient. The type of model to be used will depend upon the preferences of a network operator in relation to computational requirements, available raining data and model accuracy.

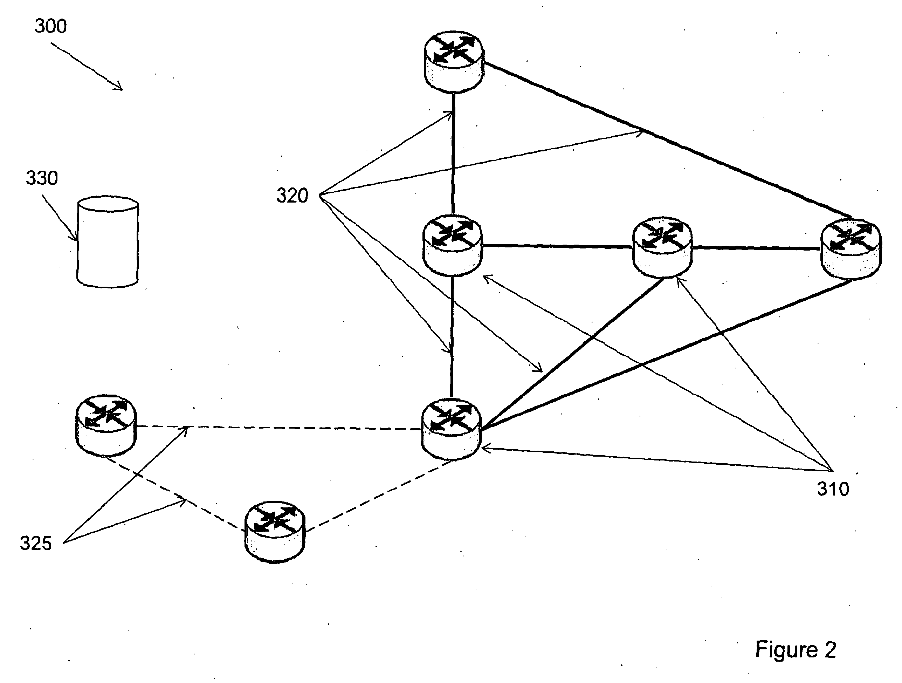

Figure 2 shows a schematic depiction of a local network 300 which comprises a plurality of interconnected routers 310 and network gatekeeper 330. The routers are in communication with the gatekeeper 330 over management communication links (not shown). The local network comprises a plurality of links 320 which support IP traffic as well as a number of pre-configured MPLS tunnels and a plurality of IP-based links which do not also support MPLS. The MPLS links are shown in a solid line and the IP-only links are shown with a dashed line in Figure 2. Any link updates from these links 320, 325 will be flooded to all the others in this local segment using, for example, Type 10 OSPF Link State Advertisements (LSAs). The network gatekeeper selectively advertises MPLS tunnels to the IGP. The purpose of this gatekeeper is to use the predictive models built for the tunnels under its control to perform better traffic management than a first-come-first-served approach which could be taken when advertising MPLS routes directly to the IGP. The operation of the gatekeeper will be described in greater detail below. Instead of providing a centralised gatekeeper it will be understood that it is possible to implement the gatekeeper function at each of the PE routers of the MPLS network

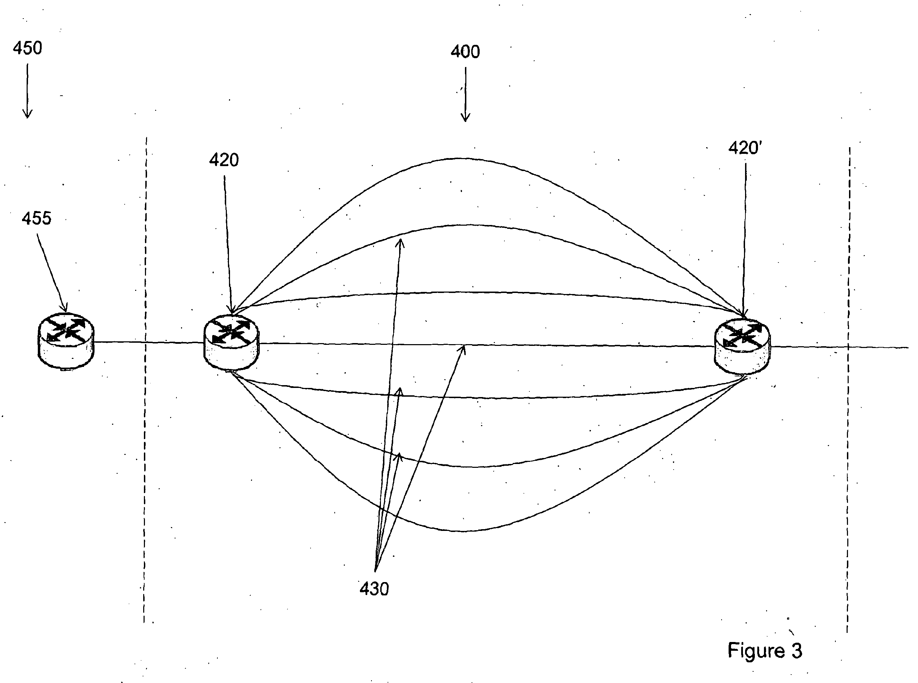

Figure 3 shows a schematic depiction of a further network configuration in which such a gatekeeper can be implemented. Customer network 450 is connected to MPLS network 400 with traffic being routed from a customer network router 455 to a first MPLS network router 420. The first MPLS network router is connected to a second MPLS network router 420' via a plurality of MPLS tunnels 430. Traffic received from the customer network at the first MPLS network router 420 will be processed in accordance with local policies and agreed SLAs. By implementing the gatekeeper function within the first MPLS network router it is possible to provide the required QoS for the traffic from the customer network without needing to expose or advertise the capabilities of the MPLS tunnels. Selected MPLS routes will be advertised to the Exterior Gateway Protocol by the first MPLS network router.

In operation the network gatekeeper (the following description is equally applicable to the gatekeeper function that may be implemented within a router) will generate a Capability Look-up Table (CLT), the derivation of which will be described below. Table 1 below shows an example of such a CLT:

Table 1: Example of a Capability Look-up Table (CLT)

| Tunnel ID | Available from time | Available until time | Destination | Bandwidth (kbps) | Class of Service |
|-----------|---------------------|----------------------|-------------|------------------|------------------|
| 1 | 0 | 300 | 10.144.x.x | 500 | EF |
| 2 | 0 | 750 | 10.233.x.x | 1000 | EF |
| 3 | 300 | 600 | 10.144.x.x | 250 | AF1 |
| 4 | 450 | 900 | 10.166.x.x | 500 | DE |
| 5 | 100 | 600 | 10.144.x.x | 250 | AF2 |

When a routing request is made to use an MPLS tunnel, for example from a session using SIP, H.323 or similar, the following actions are taken based on the capability look up table:

When a request is made to the network, the gatekeeper function determines whether or not to admit the service at the requested class of service. This decision is made by using the decision process described below based on parameters such as predicted impact, availability of resources to support the QoS requirement specified in the session request, expected performance of existing sessions, predictions of other incoming content etc. The corresponding H.323/SIP messages are sent back according to the decision made.

The first step on the decision process for the admission of session s0 (the output of each step will be used in the subsequent step, along with other inputs):

I. Identification of weakest link in shortest path

a. Inputs: a) call characteristics, e.g. expected duration of the session, destination, expected class of service, requested bandwidth, QoS parameters (jitter, loss, throughput, delay), protocols (TCP/UDP traffic); (b) routing tables calculated by routing algorithm (OSPF, for example), (c) real-time performance metrics (e.g. MIB parameters).

b. Based on destination, CoS etc., pick the shortest route to destination.

c. Identify bottleneck link in chosen shortest path based on performance metrics.

II. Calculation of expected performance at time T+1 for chosen link (may not be using the same performance metrics as (iii) above.

a. Inputs from bottleneck link chosen: predicted link downs, planned engineering works and scheduled link down events, current MIB metrics, rate of change of ECN markings in current packets, OSPF LSA Type 10 metrics (and simple functions of these, e.g. available link capacity calculated as a ratio of unreserved to reserved bandwidths - the smaller this value, less room for growth of existing services).

b. A function P = f{L, a, b, c, d}, where {a, b, c, d} are example metrics chosen from the above inputs, is derived to predict the performance of chosen bottleneck link L at time T+1 where T+1 is longer than the expected duration of the session. Function P can be a number of machine learning techniques, e.g. a neural network. This timescale is to minimise the impact of any performance degradation on the admitted service itself, if this link is chosen at a later stage for the new traffic. If the admitted session is longer than the prediction period (or the expected duration is not known), it increases the risk that if degradation occurs on the bottleneck link, a re-route must be done during the session. The techniques proposed in GB2011/001733 can then be used to manage in-life service degradation.

III. Evaluation of impact

a. Inputs: Expected performance at T+1, expected impact if admitted, expected traffic pattern in future for duration of session (from social recommendations etc. as described in GB2011/001773)

b. The purpose of this step is to decide on the impact of performance of the chosen link L based on the link performance forecast from the previous section. The expected impact input could be a 'what-if' calculation of available bandwidth in the link after the admission of s0. It could be a delay calculation, taking into account the impact of s0 on the buffer scheduling algorithm. It could be a more complex model that evaluates a multidimensional QoS matrix if s0 is admitted.

c. If the expected performance of services already on the link is acceptable, the expected traffic pattern is such that no new services are to be carried on this link at higher priority (or using an operator specified network policy) and expected impact if admitted is admissible for the other services on this link, we proceed to the next stage.

IV. Evaluation against historical performance

a. The purpose here is to check if this bottleneck link has performed as expected in previous times. For example, when a similar distribution of services of different CoS was observed on this link (with respect to allocated bandwidths for each CoS, total link occupancy etc.), were all the services supported successfully? Machine learning techniques like association rules can be used to determine this. If the outcome of this test is that the link has performed well in the past under similar conditions, the service is admitted into the network.

This call admission technique works very well if the network is not under high load and especially if the bottleneck link has unused capacity that exceeds the requirements of the session request. In this case, this admission control technique is quick in examining the bottleneck link of the shortest path using prediction models that have been periodically built and updated. Based on the thorough analysis of the bottleneck link, all other links in the path chosen can be assumed to perform better than the bottleneck link. This method above solution is a balanced trade-off between being lightweight and thorough.

The steps of creating a decision mechanism to evaluate a link (or similarly a tunnel, in the following discussion) using traffic characteristics of the link (or the links which comprise a tunnel), future expected performance of the link, expected impact if a session is admitted on the link (or tunnel) and evaluation against historical.performance are key steps to the core prediction model.

Dynamic mapping of tunnels to admitted services using the capability look up table

In a network operating at high load, evaluating one link from the shortest path gives a quick decision mechanism but might result in rejecting calls because of the shortest route's bottleneck link. In such a case, further traffic engineering can be added once a call admission decision is performed. Alternatively, call admission can be performed after a suitable route has been found, although this route may not be the shortest path.

In a further embodiment of the present invention there is provided a method which enables the selection of a number of potential routes from a plurality of candidate routes to a given destination. This method can also be incorporated with session admission such that a session is only admitted if there is at least one route that can be used to take all the required traffic to the destination. This approach is more laborious as the analysis must be extended to several tunnels, rather than just a single link. Using this technique, call admission could take longer but better traffic management will be provided during high network loads. MPLS TE has traditionally been static, with routes for customers and the marking of DSCP values being pre-determined. The present invention provides a dynamic way of allocating available tunnels to incoming trunk traffic requests that also uses the above-described core predictive model.

The capability look up table is used to choose one or more tunnels on a policy and availability basis. It maintains a list of tunnels available over time for bins of service requests to geographical regions (either individual IP addresses or a PE router at the egress node from which simple IP can be used). For example, one of the bins could be bandwidth requirement for a given class of service. Taking into account an applicable predictive model, at a time T, tunnel0 might be able to carry 0-500 kbps of EF data while tunnel1 might be able to carry 500-2500 kbps of EF data. The two bins here are unevenly sized (0-500 kbps and 500-2500 kbps). The capability tunnel may also adjust bin sizes over time. It is possible that tunnel0 can support up to 1000 kbps after time T = 450 seconds because a service that is currently flowing through it is expected to end or it is known that the operator will increase the available tunnel bandwidth at T = 450 seconds.

The gatekeeper may change its advertised MPLS routes proactively based on, for example, scheduled engineering work. If tunnel0 is expected to be affected by pre-planned work at time 0100-0300 hours, the advertised route to the IGP will be changed beforehand so that any service that is admitted and transmitted through the MPLS network is not subjected to a sudden re-route when the failure actually happens (using FRR or similar resilience technology).

Referring to Figure 3, an example of how to choose tunnels for a given service request, for example a request sent from a customer network router to the provider edge router of an MPLS network, will now be given. For example, if the network policy is to pack as many services into a portion of the network as possible, then the tunnels could be chosen in such a way that they share the same underlying infrastructure whilst being able to collectively support the bandwidth and QoS of the service request. Alternatively, if the network policy is to distribute services that request the same CoS over the same tunnel, then this can also be implemented by the gatekeeper. Another alternative is to choose multiple tunnels that support the same CoS and use a simple scheduling algorithm, such as a known hash function, to distribute the sessions across them.

The choice of tunnels depends firstly on its availability and this can be determined from the capability look up table. If a service is known to last for 90-minutes and is a video channel (which can be determined from predictions about content and user statistics), then a tunnel that is expected to carry traffic at a higher priority at a later time to a geographically closer destination might not be chosen for this session. Also, a tunnel that is expected to tear down during the session is unlikely to be chosen. Alternatively, if a DSCP value specifies end-to-end loss and delay values, the tunnel(s) might be chosen based on the predicted performance of the existing sessions on the tunnel(s) as well as the expected impact of the new session on the other services. This uses the MIB, OSPF LSA and content prediction data from the core predictive model. Any number of policies can be implemented based on: the operator's preference; the QoS expected by the incoming service; and the current and predicted network state. For each of these policies, different decision points from the original model will be used.

This provides a progression from a known static LSP to traffic trunk mapping to a more dynamic, predictive method of MPLS. This dynamic assignment of MPLS LSPs to service requests means that pre-configured LSPs can be kept alive using 'hello' messages even after all the data has traversed, so that it can be reused for another customer or another class of service at a later.time.

Once a set of tunnels have been chosen, the relevant MPLS lookup tables, such as the Forwarding Information Base (FIB, used mainly by the PE routers) and Label Forwarding Information Base (LFIB, used by all core MPLS routers), are altered. The same LSP can be assigned to several traffic trunks as long as the cumulative bandwidths and QoS of the LSPs chosen meets the requirements of the ARQ. This is a challenging task and cannot be done manually or while first setting up the network.

We now provide one detailed example of a decision process and the capability look up table:

a) Evaluation of tunnel performance: An MPLS LSP is specified as a series of connections between interfaces on routers(or IP addresses). The performance of a tunnel for a given class of service can be an aggregate of the performance of its component links (taking into account that a link may support multiple tunnels at varying allocations for each CoS at the same time). A simple example is that the maximum bandwidth that can be utilized in a single tunnel is the unreserved bandwidth value of its highest-loaded link. The maximum jitter for a tunnel could be the sum of the maximum jitter at each link. Alternatively, one could use additional metrics that are end-to-end for each CoS supported on an LSP (e.g. number and rate of change of services supported under each CoS in the tunnel). From this information, the tunnel performance is evaluated for time T+1. Note that this is time-dependent and that a tunnel that offers a capability (e.g. bandwidth) at time T may not be able to offer this at time T+1 due to service introduction, scheduled failures, congestion or another external factor which will be used in the LSP prediction model.

b) Building of capability look-up table CLT: Every time a service request is received a check is made to determine if there is an entry in the CLT that matches, or exceeds, the request. If yes, the request is granted and the entry is updated by subtracting the bandwidth consumed by the request. If the request subsequently fails because the tunnel cannot actually support the service request, then that entry is removed from the CLT. If there is no entry in the CLT that can satisfy the request, a new reservation has to be made in one of the available tunnels using the decision process described above applied at tunnel level, followed by RSVP TE or similar to implement the reservation (this is as if there is no capability look-up table and reservation must be done starting from, for example, the tunnel that has the closest match in requirements to the incoming request). When a new pathway has been found to a destination, a new entry is created in the CLT. If the new entry is higher dimensioned version of an existing entry (e.g. more bandwidth) then the existing entry is replaced by the new entry. There can be a periodical process that runs through the CLT and creates dummy requests matching the dimensions of each entry to check if the current entries are still valid. These periodical requests can also be triggered by information that is received from OSPF LSAs or other data sources. This is done in case requests are relatively rare and there is a danger that entries become invalid over time. We can also run predictions for each entry to check if an entry will be still available for a future time. If the prediction is negative, the availability of the entry will be amended. Using this method, the CLT is built and maintained concurrently to the choosing of tunnels for a given service request.

Due to the core prediction model being time-dependent, if a certain service is allocated a given tunnel at a certain time, the same service request at a later time might be allocated a different tunnel. Another advantage of this approach is that it minimises the need to create more MPLS LSPs using RSVP TE (or similar), which makes the forwarding process resume quicker. The advantage of this is that when a session request arrives with a given DSCP request to a given destination, tunnel allocation to the service using our model can be done with minimal delay, i.e. without having to send RSVP. This is so that when a session request arrives with a given DSCP request to a given destination, tunnel allocation to the service using our model can be done with minimal delay.

After the choice of tunnels is made and the service request is assigned a mapping entry in the relevant tables (e.g. FIB, LFIB), the assignment of packets to each of the chosen tunnels can be done in any fashion. The idea is to decouple LSP creation and maintenance entirely from the services that use them so that the tunnel allocation is done on the fly according to QoS requirements and network state based on a prediction model. We propose in this IRF one method of choosing the MPLS tunnel(s) for a given session request.

It should be noted that once a certain bandwidth has been allocated to a given service in a tunnel, it must be subtracted from available bandwidth for lower priorities. This must be updated in the capability look up table. Alternatively, if the frequency of session request arrival exceeds the frequency of updates of available link capability, a reservation protocol such as RSVP TE can be used to verify that the required reservation can still be met by the available tunnels. This, however, delays the time taken before session transmission can begin.

Also, if LSP tunnels expire after a timeout period (e.g. RSVP tunnel timeout period, typically 157.5 seconds, this value is either increased to a large value and/or tunnel keep-alive message must be sent as required even if the tunnel is not being used so that it is ready for deployment when the session request arrives.

As the present invention may be implemented on software within a router, or other device, it may be possible to upgrade a conventional router (or device) to one which can perform a method according to the present invention. Computer code may be deployed to a modem (or router) via download, for example via the internet, or on some physical media, for example, DVD, CD-ROM, USB memory stick, etc.

The present invention provides a session admission process which identifies the weakest link in a route between a first node and a second node and determines if the route is able to cope if the session is admitted. The suitability of a link is determined on the basis of: historical link performance; the predicted future performance of the link; and the predicted future demands on the link from other sessions supported by that link.

## Claims

1. A method of operating a communications network (300), the method comprising the steps of:

   receiving a request to admit a session to the network (300), the session being routed between a first network node and a second network node;

selecting a route through the network from the first network node (310) to the second network node (310), the route comprising a plurality of communications links (320); **characterised in that** the method comprises the further steps of:

selecting a communication link which is most likely to fail;
for that selected communications link:

a) determining the expected performance of that link for the duration of the requested session;
b) determining the impact of admitting the requested session to the sessions already supported by the selected communications link;
c) evaluating the historical performance of the selected communications link; and

accepting the request to admit a session to the network if the admitted session can be supported throughout the duration of the session without impacting presently supported sessions.

2. A method according to claim 1, wherein the shortest route through the network (300) from the first network node (310) to the second network node (320) is selected.

3. A method according to Claims 1 & 2 wherein data relating to the capacity of each of the communications links is held in a data store.

4. A method according to Claim 3, wherein the data store is updated when a new session request is accepted.

5. A method according to Claim 1 wherein the communication network comprises an MPLS network and the first network node and a second network node are connected by a plurality of MPLS tunnels.

6. A network gatekeeper (330) configured, in use, to
receive a request to admit a session to a communications network (300), the session being routed between a first network node (310) and a second network node (310);
select a route through the network from the first network node to the second network node, the route comprising a plurality of communications links (320);
**characterised in that** the network gatekeeper (330) is further configured to, in use, select a communication link which is most likely to fail;
assess the suitability of the selected communications link on the basis of:

a) the expected performance of that communications link for the duration of the requested session;
b) the impact of admitting the requested session to the sessions already supported by the selected communications link; and
c) the historical performance of the selected communications link; and

accept the request to admit a session to the network if the selected communications link is assessed to be suitable.

7. A network gatekeeper according to Claim 6 wherein the network gatekeeper (330) further comprises a data store, the data store comprising data relating to the capacity of each of the communications links in the communications network.

8. A data carrier device comprising computer executable code for performing a method according to any of Claims 1 to 5.

**Patentansprüche**

1. Verfahren zum Betreiben eines Kommunikations-Netzwerks (300), das die folgenden Schritte umfasst:

Empfangen einer Anforderung der Zulassung einer Sitzung zu dem Netzwerk (300), wobei ein Routing der Sitzung zwischen einem ersten Netzwerk-Knoten und einem zweiten Netzwerk-Knoten erfolgt,
Auswählen einer Route durch das Netzwerk von dem ersten Netzwerk-Knoten (310) zu dem zweiten Netzwerk-Knoten (310), wobei die Route eine Vielzahl von Kommunikationsverbindungen (320) umfasst,

**dadurch gekennzeichnet, dass** das Verfahren die folgenden weiteren Schritte umfasst:

Auswählen einer Kommunikationsverbindung, die sehr wahrscheinlich ausfällt;
für diese ausgewählte Kommunikationsverbindung

a) Ermitteln der erwarteten Leistungsfähigkeit dieser Verbindung für die Dauer der angeforderten Sitzung,
b) Ermitteln der Auswirkung der Zulassung der angeforderten Sitzung auf die Sitzungen, die bereits durch die ausgewählte Kommunikationsverbindung unterstützt werden,
c) Bewerten der Leistungsfähigkeits-Geschichte der ausgewählten Kommunikationsverbindung
und

Akzeptieren der Anforderung der Zulassung einer Sitzung zu dem Netzwerk, wenn die zugelassene Sitzung während der gesamten Dauer der Sitzung ohne Einfluss auf gegenwärtig unterstützte Sitzungen unterstützt werden kann.

2. Verfahren nach Anspruch 1, bei dem die kürzeste Route durch das Netzwerk (300) von dem ersten Netzwerk-Knoten (310) zu dem zweiten Netzwerk-Knoten (320) ausgewählt wird.

3. Verfahren nach den Ansprüchen 1 und 2, bei dem Daten, die sich auf die Kapazität jeder der Kommunikationsverbindungen beziehen, in einem Datenspeicher gespeichert gehalten werden.

4. Verfahren nach Anspruch 3, bei dem der Datenspeicher aktualisiert wird, wenn eine neue Sitzungs-Anforderung akzeptiert wird.

5. Verfahren nach Anspruch 1, bei dem das Kommunikations-Netzwerk ein MPLS-Netzwerk ist und der erste Netzwerk-Knoten und ein zweiter Netzwerk-Knoten durch eine Vielzahl von MPLS-Tunneln verbunden sind.

6. Netzwerk-Gatekeeper (330), der so konfiguriert ist, dass er im Betrieb
eine Anforderung der Zulassung einer Sitzung zu einem Kommunikations-Netzwerks (300) empfängt, wobei ein Routing der Sitzung zwischen einem ersten Netzwerk-Knoten (310) und einem zweiten Netzwerk-Knoten (310) erfolgt,
eine Route durch das Netzwerk von dem ersten Netzwerk-Knoten zu dem zweiten Netzwerk-Knoten auswählt, wobei die Route eine Vielzahl von Kommunikationsverbindungen (320) umfasst,
**dadurch gekennzeichnet, dass** der Netzwerk-Gatekeeper (330) ferner so konfiguriert ist, dass er im Betrieb
eine Kommunikationsverbindung auswählt, die sehr wahrscheinlich ausfällt,
die Eignung der ausgewählten Kommunikations verbindung bewertet auf der Basis

a) der erwarteten Leistungsfähigkeit dieser Kommunikationsverbindung für die Dauer der angeforderten Sitzung,
b) der Auswirkung der Zulassung der angeforderten Sitzung auf die Sitzungen, die bereits durch die ausgewählts Kommunikationsverbindung unterstützt werden,

und

c) der Leistungsfähigkeits-Geschichte der ausgewählten Kommunikationsverbindung

und
die Anforderung der Zulassung einer Sitzung zu dem Netzwerk akzeptiert, wenn die ausgewählte Kommunikationsverbindung als geeignet bewertet wird.

7. Netzwerk-Gatekeeper nach Anspruch 6, wobei der Netzwerk-Gatekeeper (330) ferner einen Datenspeicher aufweist, wobei der Datenspeicher Daten enthält, die sich auf die Kapazität jeder der Kommunikationsverbindungen in dem Kommunikations-Netzwerk beziehen.

8. Datenträger-Vorrichtung, die einen durch einen Computer ausführbaren Code zur Durchführung eines Verfahrens nach einem der Ansprüche 1 bis 5 enthält.

**Revendications**

1. Procédé d'exploitation d'un réseau de communication (300), le procédé comprenant les étapes ci-dessous consistant à :

   recevoir une demande concernant l'admission d'une session sur le réseau (300), la session étant acheminée entre un premier noeud de réseau et un second noeud de réseau ;
   sélectionner un chemin à travers le réseau, du premier noeud de réseau (310) au second noeud de réseau (310), le chemin comprenant une pluralité de liaisons de communication (320) ; **caractérisé en ce que** le procédé comprend les étapes supplémentaires ci-dessous consistant à :

      sélectionner une liaison de communication qui est la plus susceptible de devenir défaillante ;
      pour cette liaison de communication sélectionnée :

         a) déterminer le rendement attendu de cette liaison pour la durée de la session demandée ;
         b) déterminer l'impact de l'admission de la session demandée sur les sessions déjà prises en charge par la liaison de communication sélectionnée ;
         c) évaluer le rendement historique de la liaison de communication sélectionnée ; et

      accepter la demande concernant l'admission d'une session sur le réseau si la session admise peut être prise en charge tout au long de la durée de la session sans impact sur les sessions actuellement prises en charge.

2. Procédé selon la revendication 1, dans lequel est sélectionné le plus court chemin à travers le réseau (300), du premier noeud de réseau (310) au second noeud de réseau (320).

3. Procédé selon les revendications 1 et 2, dans lequel des données relatives à la capacité de chacune des liaisons de communication sont conservées dans un magasin de données.

4. Procédé selon la revendication 3, dans lequel le magasin de données est mis à jour lorsqu'une nouvelle demande de session est acceptée.

5. Procédé selon la revendication 1, dans lequel le réseau de communication comprend un réseau de commutation MPLS et le premier noeud de réseau et un second noeud de réseau sont connectés par une pluralité de tunnels de commutation MPLS.

6. Contrôleur d'accès de réseau (330) configuré, en cours d'utilisation, de manière à :

   recevoir une demande concernant l'admission d'une session sur un réseau de communication (300), la session étant acheminée entre un premier noeud de réseau (310) et un second noeud de réseau (310) ;
   sélectionner un chemin à travers le réseau, du premier noeud de réseau au second noeud de réseau, le chemin comprenant une pluralité de liaisons de communication (320) ;
   **caractérisé en ce que** le contrôleur d'accès de réseau (330) est en outre configuré de manière à, en cours d'utilisation, sélectionner une liaison de communication qui est la plus susceptible de devenir défaillante ;
   évaluer la pertinence de la liaison de communication sélectionnée sur la base des éléments ci-dessous :

      a) le rendement attendu de cette liaison de communication pour la durée de la session demandée ;
      b) l'impact de l'admission de la session demandée sur les sessions déjà prises en charge par la liaison de communication sélectionnée ; et
      c) le rendement historique de la liaison de communication sélectionnée ; et

   accepter la demande concernant l'admission d'une session sur le réseau si la liaison de communication sélectionnée est évaluée comme étant adéquate.

7. Contrôleur d'accès de réseau selon la revendication 6, dans lequel le contrôleur d'accès de réseau (330) comprend en outre un magasin de données, le magasin de données comprenant des données connexes à la capacité de chacune des liaisons de communication dans le réseau de communication.

8. Dispositif formant support de données comprenant un code exécutable par ordinateur pour mettre en oeuvre un procédé selon l'une quelconque des revendications 1 à 5.

Figure 1

EP 2 834 951 B1

300

330

320

310

325

Figure 2

14

450

400

420'

420

455

430

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7490169 B
- WO 2011117570 A
- GB 2011001773 A
- GB 2011001733 A

**Non-patent literature cited in the description**

- **BASHAR et al.** *Machine Learning Based Call Admission Control Approaches: A Comparative Study*
- A Tutorial on Learning with Bayesian Networks. **D. HECKERMAN.** Learning in Graphical Models. MIT Press, 1999